# EUROPEAN PATENT APPLICATION

(11) **EP 1 653 471 A2**
(43) Date of publication of application: **03.05.2006**
(21) Application number: 05256629.6
(22) Date of filing: 26.10.2005
(51) Int. Cl.: G11B 27/10, G11B 20/00, G11B 27/00

(54) **Content using apparatus, content using method, distribution server apparatus, information distribution method, and recording medium**

(30) Priority: 26.10.2004 JP 2004310875
(71) Applicant: SONY CORPORATION, Tokyo (JP)
(72) Inventor: Takai, Motoyuki, Shinagawa-ku Tokyo (JP); Yamashita, Kosei, Shinagawa-ku Tokyo (JP); Miyajima, Yasushi, Shinagawa-ku Tokyo (JP); Sako, Yoichiro, Shinagawa-ku Tokyo (JP); Terauchi, Toshiro, Shinagawa-ku Tokyo (JP); Sasaki, Toru, Shinagawa-ku Tokyo (JP); Sakai, Yuichi, Shinagawa-ku Tokyo (JP)
(74) Representative: Nicholls, Michael John

(57) **Abstract**

A content using apparatus includes an obtaining unit configured to obtain content data and delimiter information for the content data; an accepting unit configured to accept input of an instruction by a user; and a generating unit configured to generate content data of a new composition or arrangement from content data subject to processing, on the basis of the delimiter information obtained by the obtaining unit and the instruction accepted by the accepting unit.

## Description

The present invention contains subject matter related to Japanese Patent Application JP 2004-310875 filed in the Japanese Patent Office on October 26, 2004, the entire contents of which are incorporated herein by reference.

The present invention relates to apparatuses and methods for using content data, such as music content data or video content data, apparatuses and methods for distributing information that is used for the apparatuses and methods for using content data, and recording media having recorded content and associated information thereon.

Various kinds of music content are abundantly provided via recording media such as compact discs (CDs) or via transmission media such as the Internet. Various techniques have been proposed so that users can use such abundant music content in various manners according to the users' needs.

For example, in a playback apparatus disclosed in Japanese Unexamined Patent Application Publication No. 8-55464, positions of bars of music content that is recorded on a CD, an MD (Mini Disc® ), or the like are automatically calculated so that it is possible to display bar numbers of the music content or to start playback from a specified bar. With the playback apparatus, it is possible, for example, to accurately recognize the bar numbers of the respective bars of the music content, simply locate the playback position to the beginning of an intended bar, and to repeatedly play back only the bar. This serves to improve the efficiency of learning the music or practice for playing the music.

According to an apparatus disclosed in Japanese Unexamined Patent Application Publication No. 2003-177784, it is possible to extract points of acoustic change, such as a highlight portion of music content, from audio signals (acoustic signals) of a piece of music (music content). With this apparatus, it is possible to start playback from the beginning of a piece of music, the second chorus, a highlight portion, or the like. Thus, it is relatively easy to extract or play back a desired part of audio content.

With these techniques, it is possible to enjoy music content more flexibly and effectively.

However, according to the apparatus disclosed in Japanese Unexamined Patent Application Publication No. 8-55464, information representing bar delimiters is supposed to be input by a user. As for the apparatus disclosed in Japanese Unexamined Patent Application Publication No. 2003-177784, it is supposed that music content is analyzed in advance by a user. That is, some preparation is done to use certain music content in an intended manner. The preparation can be laborious for the user or can take time, inhibiting convenient use.

Recently, with abundantly provided music content data or video content data, demand is being raised for searching or repetition of an arbitrary bar, locating a point of change in music, real-time editing by a user, or processing of a desired part of content for reconstruction. That is, instead of using abundantly provided music content or video content as it is, demand is being raised for using content in various manners according to users' preferences.

However, when music content, video content, or AV (audio/visual) content in which audio data and video data are synchronized; such as a movie, is processed or reconstructed, it is prohibited to specify relevant parts and to process or reconstruct the content without temporal delimiter information of the content. If temporal delimiter information can be obtained only through making preparations as disclosed in the documents mentioned above, simple use of content could be prohibited.

It is desired that an apparatus, a method, and a recording medium be provided so that it is possible to accurately identify intended parts of various content, such as music content, video content, or AV content, and to readily reedit or reconstruct content, such as processing the identified parts, or for replacing identified parts with other identified parts.

According to an embodiment of the present invention, there is provided a content using apparatus including obtaining means for obtaining content data and delimiter information for the content data; accepting means for accepting input of an instruction by a user; and generating means for generating content data of a new composition or arrangement from content data subject to processing, on the basis of the delimiter information obtained by the obtaining means and the instruction accepted by the accepting means.

According to the content using apparatus, the obtaining means obtains content data and accompanying delimiter information for the content data, and the generating means generates new content data from the content data subject to processing, obtained by the obtaining means, on the basis of the delimiter information obtained and a user's instruction accepted by the accepting means, for example, by processing data of a target segment or deleting or replacing data of a target segment.

Accordingly, without user's labor or time, content data and accurate delimiter information for the content data can be automatically obtained by the obtaining means. Furthermore, it is possible to reedit or reconstruct existing content data on the basis of delimiter information and instructions input by the user to generate and play back new content data and enjoy the content data.

According to another embodiment of the present invention, there is provided a content using method including the steps of obtaining content data and delimiter information for the content data; accepting input of an instruction by a user; and generating content data of a new composition or arrangement from content data subject to processing, on the basis of the delimiter information obtained and the instruction accepted.

According to another embodiment of the present invention, there is provided a distribution server apparatus including storage means for storing content data and delimiter information for the content data in association with each other; receiving means for receiving a content-data providing request transmitted via a network; searching means for searching for target content data from the storage means on the basis of the providing request received by the receiving means; and sending means for sending the content data retrieved by the searching means and delimiter information for the content data to a source of the providing request.

According to the distribution server apparatus, the storage means stores one ore more pieces of content data accompanied with delimiter information. When the receiving means has received a content-data providing request, the searching means searches the content data in the storage means for target content data, and the sending means sends the content data retrieved and the accompanying delimiter information to a source of the providing request.

Thus, delimiter information accompanying each piece of content data is distributed simultaneously with the piece of content data in an accompanying manner. Accordingly, an apparatus at the destination of distribution can reliably obtain the accompanying delimiter information as well as the target content data.

According to another embodiment of the present invention, there is provided an information distribution method including the steps of receiving a content-data providing request transmitted via a network; searching a recording medium for target content data and delimiter information for the target content data on the basis of the providing request received, the recording medium storing one or more pieces of content data having associated delimiter information; and sending the content data retrieved and delimiter information for the content data to a source of the providing request.

According to another embodiment of the present invention, there is provided a recording medium having recorded thereon content data accompanied with delimiter information, wherein the content data accompanied with the delimiter information is recorded so that the delimiter information for the content data is read in an accompanying manner when the content data is read.

According to the recording medium, content data is recorded with accompanying delimiter information, and the accompanying delimiter information is also read when the content data is read. Thus, content data and associated delimiter information can be processed as a pair. This allows efficient management of content data and associated delimiter information.

According to these embodiments of the present invention, when content is reconstructed or edited by a user, using delimiter information for the content, it is readily possible to reedit or reconstruct the content, and to create high-quality content in accordance with individual users' preferences or the like.

Using content delimiter information, it is possible, for example, to synchronize content delimiters with user's movement, which has not hitherto been possible. This improves the sense of synchronization with the content. Furthermore, by playing back another piece of content in synchronization with delimiter information of a certain piece of content, it is possible to reconstruct the content in an impressive manner.

Furthermore, by preparing delimiter information for music content data recorded on an existing CD, or content data provided via a network as compressed by ATRAC (Adaptive Transform Acoustic Coding), MP3 (Motion Picture Expert Group Audio Layer 3), or the like, the user can reedit or reconstruct existing music content data.

Furthermore, since content data is accompanied with delimiter information, it is usually not needed to separately manage content data and associated delimiter information. This serves to improve convenience.

The invention will now be described with reference to the accompanying non-limiting drawings.
Fig. 1 is a.block diagram of recording and playback apparatus embodying a content using apparatus and a content using method according to an embodiment of the present invention;
Figs. 2A and 2B are diagrams for explaining recording media that can be used and how the recording media are used;
Fig. 3 is schematic diagram for explaining distribution of content data and delimiter information as content property information;
Fig. 4 is a block diagram of a content server embodying a distribution server apparatus and an information distribution method according to an embodiment of the present invention;
Fig. 5 is a flowchart of a process of obtaining content property information and a process of providing content property information;
Fig. 6 is schematic diagram for explaining another example of distribution of content data and delimiter information as content property information;
Fig. 7 is a diagram for explaining a function of reconstructing content by the recording and playback apparatus;
Fig. 8 is a diagram for explaining an example where content data is music content data and delimiter information thereof is bar-delimiter information;
Fig. 9 is a diagram for explaining an example where music content data is reconstructed using bar-delimiter position information;
Fig. 10 is a block diagram of a recording and playback apparatus including a sensor for detecting movement of a user;
Fig. 11 is a block diagram for explaining in detail the recording and playback apparatus shown in Fig. 10;
Fig. 12 is a diagram for explaining a specific example where music content having bar-delimiter information as delimiter information is reconstructed for playback using the recording and playback apparatus shown in Fig. 10;
Fig. 13 is a diagram for explaining another example of use of delimiter information (another example of reconstruction of content data);
Fig. 14 is a flowchart of a process of reconstructing content data;
Fig. 15 is a diagram for explaining an example where content data and delimiter information as content property information are managed using a WAVE file;
Fig. 16 is a diagram for explaining a file format that allows management of content data and associated delimiter information;
Fig. 17 is a diagram for explaining a case where both content data and delimiter information can be managed using an SMF; and
Fig. 18 is a diagram for explaining a case where both content data and delimiter information can be managed using an SMF.

Now, apparatuses, methods, and recording media according to embodiments of the present invention will be described with reference to the drawings.

### Recording and Playback Apparatus

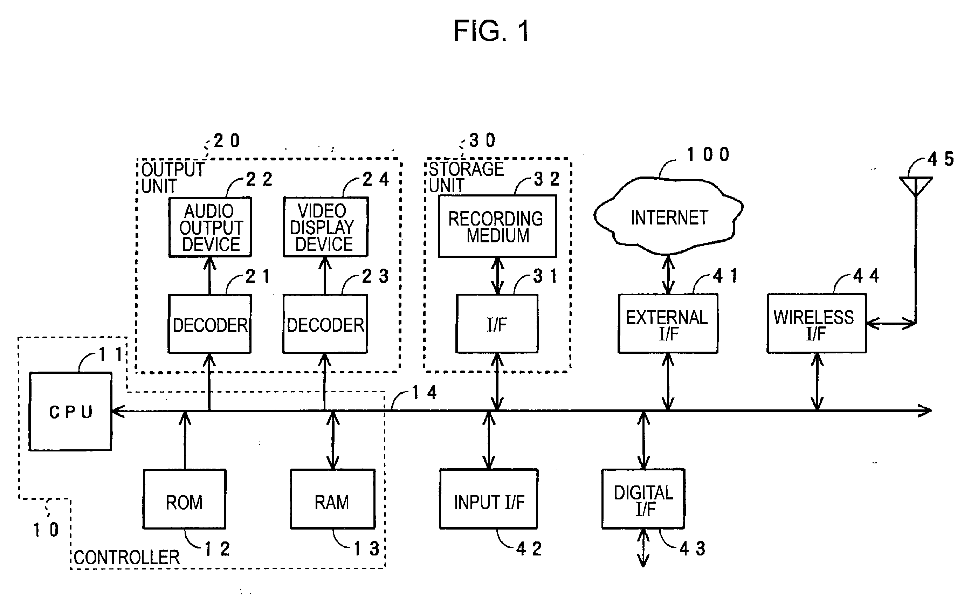

Fig. 1 is a block diagram of a recording and playback apparatus embodying an apparatus and method according an embodiment of the present invention. Referring to Fig. 1, the recording and playback apparatus according to this embodiment includes a controller 10, an output unit 20, a storage unit 30, an external interface (hereinafter abbreviated as external I/F) 41, an input interface (hereinafter abbreviated as input I/F) 42, a digital interface (hereinafter abbreviated as digital I/F) 43, a wireless interface (hereinafter abbreviated as wireless I/F) 44, and a transmitting and receiving antenna 45.

The controller 10 is a microcomputer in which a central processing unit (CPU) 11, a read-only memory (ROM) 12, and a random access memory (RAM) 13 are connected to each other via a CPU bus 14. The controller 10 controls the components of the recording and playback apparatus.

The output unit 20 includes an audio decoder 21, an audio output device 22, a video decoder 23, and a video display device 24. The audio output device 22 is a speaker. The video display device 24 is a display such as a liquid crystal display (LCD), a plasma display panel (PDP), an organic electro luminescence (EL) display, or a cathode-ray tube (CRT) display.

The storage unit 30 includes an interface (hereinafter abbreviated as I/F) 31 and a recording medium 32. As the recording medium 32, various types of recording media according to embodiments of the present invention can be used, such as hard disks, optical disks, magneto-optical disks, semiconductor memories, and flexible disks.

Furthermore, as the recording medium 32, it is possible to use a plurality of recording media of the same type, such as a plurality of hard disks or a plurality of optical disks. Also, it is possible to use a plurality of recording media of different types, such as a hard disk and an optical disk, or an optical disk and a magneto-optical disk.

As will be described later, the recording medium 32 stores audio content data, video content data, or AV content data that is to be played back. As will be described later, pieces of content data are accompanied with delimiter information that is content property information associated with the respective pieces of content data and that serves as various types of delimiters for the pieces of content data.

When content data is obtained via a recording medium or a transmission path such as a network, the content data is provided with accompanying delimiter information as content property information. Thus, content data and accompanying delimiter information provided together are recorded and stored on the recording medium 32.

The external I/F 41 is used, in this embodiment, for connection with the Internet 100. Thus, in this embodiment, audio content data, video content data, audio and video content data, text data, or other types of data can be downloaded from the Internet 100 and stored in the recording medium 32 via the I/F 31. Also, it is possible to send information to an intended server apparatus from the recording and playback apparatus and to store the information therein.

The input I/F 42 is a key operation unit for accepting inputs through operations by a user. The operation inputs accepted via the input I/F 42 are converted into electric signals, which are supplied to the controller 10. Thus, the controller 10 can control the recording and playback apparatus according to the operation inputs by the user.

The digital I/F 43 is an interface compliant to IEEE (Institute of Electrical and Electronics Engineers) 1394, USB (Universal Serial Bus), or other standards for digital interfaces. The digital I/F 43 is connected to another electronic apparatus via a dedicated line so that data such as content data and delimiter information can be exchanged.

The wireless I/F 44 and the transmitting and receiving antenna 45 can exchange information with each other, for example, via a wireless LAN connection. Furthermore, it is possible to receive information such as content data and delimiter information from a wireless LAN system via the wireless I/F 44 and the transmitting and receiving antenna 45.

In the recording and playback apparatus according to this embodiment, as described earlier, in the recording medium 32 of the storage unit 30, content data and accompanying delimiter information as content property information are stored. The content data is received from a server apparatus on the Internet 100 via the Internet 100 and the external I/F 41, or is received from an external apparatus via the transmitting and receiving antenna 45 and the wireless I/F 44 or via the digital I/F 43. When the recording medium 32 is a removable recording medium, such as a CD, content data with accompanying delimiter information is provided to the recording and playback apparatus via the recording medium.

When playback of intended audio content stored in the recording medium 32 is instructed via the input I/F 42, the controller 10 reconstructs the content data to be played back on the basis of the instruction input by the user and the delimiter information for the content data, and supplies the content data reconstructed to the output unit 20. Accordingly, sounds and images corresponding to the content data are output for viewing and listening.

### Delimiter Information Accompanying Content Data

Delimiter information is content property information for content data, and various types of delimiter information exist depending on the types of content data. For example, when the content data is music data, delimiter information for the content data represents points of change in music or musically meaningful segments, for example, as described below.

For example, regarding music that is produced by playing back the music data, the delimiter information represents points of segmentation at intervals of one bar, points of segmentation at intervals of a plurality of bars, such as two bars, three bars, four bars, and so forth, the start and end points of an introduction, points of change in melody, the start and end points of a highlight portion, the start and end points of singing or utterance, the start and end points of an interlude, the start and end points of ending, the start and end points of a chorus, the start and end points of performance of a specific musical instrument, the start and end points of each duet part, and so forth. The delimiter information may also represent the start and end points of other specific types of segments of music content.

In ordinary musical pieces, the points of change in melody are formed by parts with different melodies, such as an introduction, A melody or the first melody, B melody or the second melody, a highlight portion, and an ending.

Although the terms "start and end points" are used herein, in the case of certain continuous segments, such as bars, it is possible to use a point immediately before the start point of a next segment as the end point of a segment. That is, information representing end points does not necessary exist, and it is possible that delimiter information represents only start points.

When the content data is video data, delimiter information for the content data represents various points of change in video content or various meaningful segments of video content, as follows.

For example, the delimiter information may represent a point of video scene change, a point of video cut change, a point of appearance of an object or person of interest, a point of disappearance of an object or person of interest, the start and end points of a scene of interest such as an action scene or a car chase scene, a point of change in image quality such as brightness, color phase, or color saturation, the start and end points of fade in, the start and end points of fade out, and so forth. The delimiter information may also represent the start and end points of other types of segments of video content.

Regarding video content data, a video scene change refers to a change in the scene itself, such as a change from indoor to outdoor, while a cut change refers to a change in viewpoint (camera position) of the same scene, for example, from a front view to a side view.

Also with video content, in the case of certain continuous segments, such as bars, it is possible to use a point immediately before the start point of a next segment as the end point of a segment. That is, information representing end points does not necessary exist, and it is possible that delimiter information represents only start points.

In the case of AV content in which audio data and video data are played back in synchronization with each other, the delimiter information for audio content and the delimiter information for video content described above can be used respectively for the audio component and the video component.

The delimiter information can be represented in various forms. For example, when the content data is music content data recorded on an optical disk, the delimiter information may be represented by, for example, time information of subcodes, sector addresses or cluster addresses of the optical disk, or the number of bytes or bits from the beginning of content.

When the content data is AV content data or video content data such as television data or video data, the delimiter information may be represented by time codes of content, the number of bytes or bits from the beginning of content, the number of samples, the number of GOPs (group of pictures), the number of video frames, or the number of sound frames. When the audio content data is compressed, the delimiter information may be represented by the number of compressed blocks from the beginning.

When the number of bytes, the number of bits, the number of samples, the number of GOPs, the number of video frames, the number of sound frames, or the number of compressed blocks is used, without limitation to the number or quantity as counted from the beginning, the delimiter information may be represented on the basis of the difference with respect to the immediately previous delimiter information. Alternatively, the delimiter information may be represented with reference to a predetermined position, such as the end point.

The delimiter information may be represented by a mathematical expression. For example, when the length of the first segment is represented by a value a, followed by n segments each having a length represented by a value b, and then followed by m segments each having a length represented by a value c, the delimiter information can be represented as a + b·n + c·m. In this expression, the symbol "·" represents repetition (multiplication). The delimiter information may be represented in various other forms.

As described above, various types of delimiter information exist, and various forms of representation can be used. Thus, delimiter information for a piece of content data is not necessarily limited to a single type. It is possible that a plurality of types of delimiter information exists for a single piece of content data.

When a plurality of types of delimiter information exists for a single piece of content data, for example, predetermined class information is attached so that it is possible to grasp the type and form of representation of the delimiter information. In this way, it is possible to use a plurality of types of delimiter information for a single piece of content data.

As described earlier, each piece of content data is accompanied with one or more types of delimiter information as content property information. Thus, when target content data is obtained, delimiter information for the content data is obtained together.

Each piece of content data is accompanied with an identifier such as an ISRC (International Standard Recording Code), so that it is possible to identify either content data or delimiter information thereof on the basis of the identifier. That is, using the identifier for content data, it is possible to instruct that content data and delimiter information be obtained or to instruct playback of target content data.

### Recording Medium 32

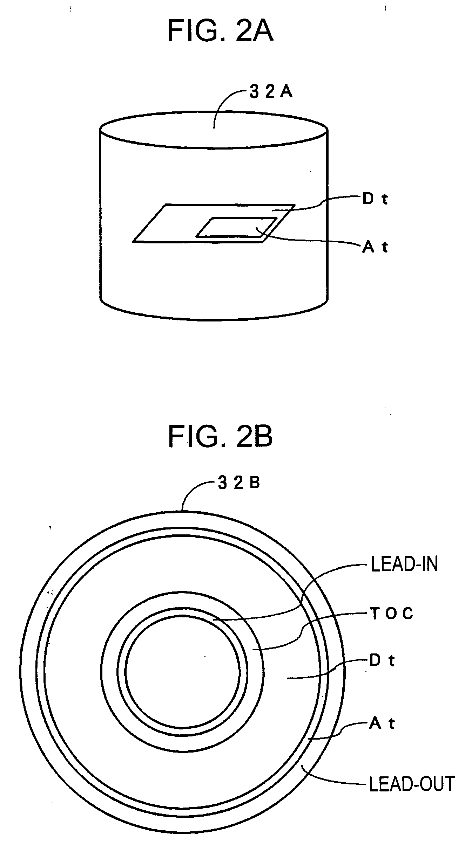

Now, specific examples of the recording medium 32 that is used in the recording and playback apparatus according to the embodiment will be described. Figs. 2A and 2B are diagrams for explaining specific examples of recording media that can be used in the recording and playback apparatus according to this embodiment. Fig. 2A shows a case where a hard disk (hard disk drive) 32A is used. Fig. 2B shows a case where an optical disk 32B is used.

First, the case where the hard disk 32A is used as the recording medium 32 will be described with reference to Fig. 2A. Referring to Fig. 2A, content data Dt, such as audio content data, video content data, or AV content data, is stored in the hard disk 32A. For example, the content data Dt is copied from an optical disk for private use, or is downloaded via the Internet.

As described earlier, delimiter information as content property information is provided for the content data Dt, and the delimiter information as the content property information At is recorded in a separate chunk in the file of the content data, for example, as shown in Fig. 2A. As described above, delimiter information as content property information for content data is managed so that it accompanies the content data, and is used for reconstructing content data when playback of the content data is instructed.

It is possible to store the content data Dt and the delimiter information as the content property information At in separate files of the same hard disk. The content data Dt and the content property information At thereof stored in different files can be managed in association with each other, for example, using a content data identifier.

Also, it is possible to record the content data Dt and the delimiter information as the content property information At on different recording media. Also in this case, the content data Dt and the content property information At thereof can be managed in association with each other, for example, using a content data identifier.

However, by defining a logical format that allows delimiter information as content property information to be stored in a separate chunk in the content data file, as shown in Fig. 2A, it is not needed to search for delimiter information for content data to be played back, and by specifying content data to be played back, delimiter information for the content data can be obtained together for use.

Next, the case where the optical disk 32B is used as the recording medium 32 will be described with reference to Fig. 2B. Referring to Fig. 2B, content data Dt, such as audio content data, video content data, or AV content data, is stored in a data storage area of the optical disk 32B. The optical disk 32B, in addition to a lead-in area, a TOC (table of contents) area, a content-data area, and a lead-out area that are usually provided on an optical disk, has an area for storing delimiter information, i.e., the content property information At, where delimiter information for the content data Dt is stored.

In this case, the content data Dt and the content property information At are associated with each other using an identifier for identification of the content data. As described earlier, the content property information At is used when the content data Dt is reconstructed for playback. The optical disk 32B is sold with content data recorded thereon, or is created by recording content data downloaded via the Internet using a personal computer or the like.

As shown in Figs. 2A and 2B, the content property information At recorded on the recording medium can be arbitrarily rewritten, added, or deleted, or existing delimiter information can be replaced with new delimiter information by the user. For example, when delimiter information is added, in the recording and playback apparatus with the recording medium loaded thereon, target content data is automatically analyzed to generate new delimiter information, or new delimiter information may be input by the user via the input I/F 42.

Also, it is possible to accept a changing instruction from the user via the input I/F 42 and to change delimiter information recorded on the recording medium 32. Similarly, it is possible to accept a changing instruction from the user via the input I/F 42 and to delete delimiter information recorded on the recording medium 32. Also, it is possible to replace delimiter information recorded on the recording medium 32 with delimiter information that is newly generated or input as described above.

Furthermore, it is possible to receive new delimiter information via the Internet 100 and the external I/F 41, from an external apparatus such as a recording apparatus connected to the digital I/F 43, or via a LAN through the wireless I/F 44 and the transmitting and receiving antenna 45, using the new delimiter information for addition or replacement. In any of these cases, content data and delimiter information are associated with each other using a content data identifier, so that it is clear which delimiter information is associated with which content data.

Various content Dt is accompanied with delimiter information as content property information. Thus, it is possible to distribute content property information together with distribution of content data, to use content property information effectively in accordance with use of content data, and to use content data in a new manner.

### Distribution of Content Data and Delimiter Information

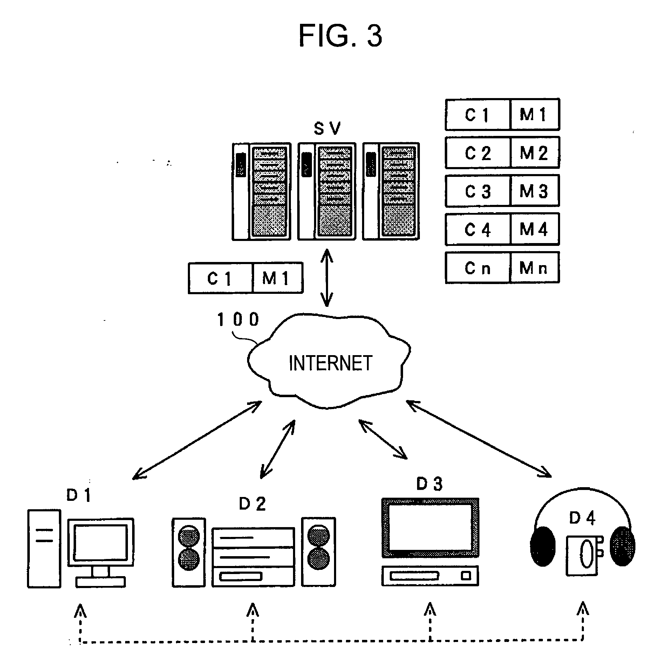

Fig. 3 is a schematic diagram for explaining distribution (transmission) of content data and accompanying delimiter information as content property information. In Fig. 3, C1, C2, C3, ..., Cn (n is an integer) denote pieces of content data, and M1, M2, M3, ..., Mn (n is an integer) denote pieces of delimiter information as content property information.

Referring to Fig. 3, a content server SV distributes content data and delimiter information. As shown in Fig. 3, a personal computer D1, an audio apparatus D2, a video apparatus D3, and a portable AV apparatus D4, which are user apparatuses of the user, can be connected to the Internet 100, and can exchange various information via the Internet 100. Each of the personal computer D1, the audio apparatus D2, the video apparatus D3, and the portable AV apparatus D4 is implemented by the recording and playback apparatus according to this embodiment.

Referring to Fig. 3, the content server SV stores sets of a large number of pieces of content data and delimiter information (content property information) accompanying the large number of pieces of content data. Each of the personal computer D1, the audio apparatus D2, the video apparatus D3, and the portable AV apparatus D4 sends a content-data providing request including an identifier of target content data for the user of the apparatus to the content server SV via the Internet 100.

Upon receiving the content-data providing request from the user, the content server SV searches for the content data requested, and sends the set of the content data and the delimiter information for the content data to the user apparatus at the source of the request. That is, the content data and the accompanying delimiter information are provided to the user apparatus at the source of the request. The user apparatus that requested the content data receives the content data and the accompanying delimiter information transmitted from the content server to the user apparatus, and records the content data and the accompanying delimiter information on the recording medium thereof.

In this manner, in response to a request from each user apparatus, the content server SV can provide content data and accompanying delimiter information to the user apparatus at the source of the request. Each of the personal computer D1, the audio apparatus D2, the video apparatus D3, and the portable AV apparatus D4 can download target content data and accompanying delimiter information simultaneously from the content server SV.

In some cases, two or more pieces of delimiter information (content property information) exist for a single piece of content data. For example, a single piece of music content data can have bar-delimiter information, beat-delimiter information, and highlight-portion-delimiter information. When a plurality of pieces of delimiter information exists for a single piece of content data, as will be described later, it is possible to receive all the plurality of pieces of delimiter information together with content data. It is also possible to allow the user to specify one or more pieces of delimiter information so that the specified delimiter information will be downloaded together with content data.

Each of the personal computer D1, the audio apparatus D2, the video apparatus D3, and the portable AV apparatus D4 that has simultaneously downloaded content data and accompanying delimiter information can arbitrarily rewrite, add, or delete the delimiter information accompanying the content data. That is, it is possible to maintain delimiter information independently of associated content data.

Furthermore, as will be described data, it is possible to generate delimiter information at the user apparatus or to allow the user to input delimiter information for content data stored at the user apparatus. In this case, for example, when the content data is music content data, the music content data is automatically analyzed to detect a beat, a tempo, a rhythm, or the like, and delimiter information representing points of change is generated. Furthermore, it is possible to play back content data and allow the user to specify a portion of interest for the user, and to use the information specified as delimiter information.

It is possible to provide delimiter information generated or input at the user apparatus as described above to the content server SV via the Internet 100, and store the delimiter information on the content server SV so that the delimiter information can be accessed by other users. In this case, when uploading delimiter information from the user apparatus to the content server SV, delimiter information may be provided together with content data. It is also possible to provide only delimiter information to the content server SV and to associate the delimiter information with content data at the content server SV.

Content data and accompanying delimiter information can be exchanged by peer to peer with recording and playback apparatuses of other users, instead of receiving from the content server SV. Using this transmission method, content data and accompanying delimiter information as content property information can be shared within a specific community or among friends. That is, it is possible to share delimiter information as content property information among acquaintances.

Furthermore, when the personal computer D1, the audio apparatus D2, the video apparatus D3, and the AV apparatus D4, shown in Fig. 3, are owned by the same user, delimiter information can be exchanged as indicated by dotted lines in Fig. 3, for example, by connecting apparatuses using digital interfaces via a LAN or directly.

Thus, when a user shares certain content data among a plurality of recording and playback apparatuses, the user need not download content data and accompanying delimiter information from the content server SV more than once. Furthermore, it is possible to implement a system in which content data and accompanying delimiter information are managed unitarily by, for example, by the personal computer D1 so that each of the recording and playback apparatuses, i.e., the audio apparatus D2, the video apparatus D3, and the portable AV apparatus D4, can request and obtain content data and accompanying delimiter information as needed.

### Construction of Content Server

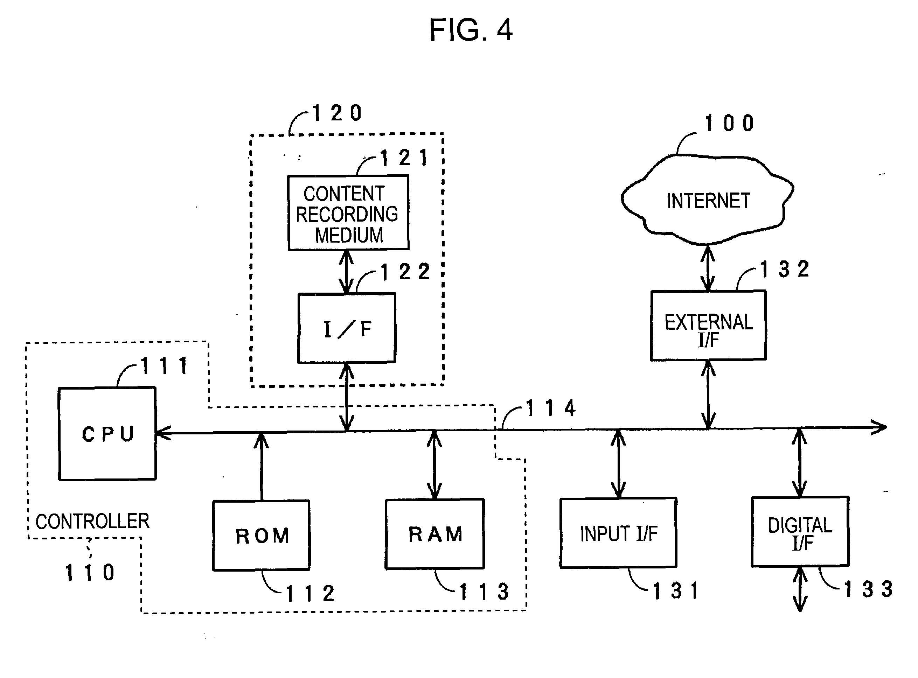

The content server SV is, for example, as shown in Fig. 4, a computer having an I/F 122 and a large-capacity content recording medium 121 such as a hard disk, so that content data and accompanying delimiter information as content property information can be stored. The content server SV includes a controller 110 including a CPU 111, a ROM 112, and a RAM 113, an input I/F 131 for accepting inputs through operations by the user, and external I/F (communication I/F) 132 for connection with the Internet, and a digital I/F 133 for connection with another apparatus. The content server SV is constructed the same as the recording and playback apparatus shown in Fig. 1, except in that the output unit 20, the wireless I/F 44, and the transmitting and receiving antenna are not provided.

The external I/F 132 implements the function of receiving means for receiving a request for providing content data and accompanying delimiter information, and the function of sending means for sending content data and accompanying delimiter information. The controller 110, the I/F 122, and the recording medium 121 cooperate to implement the function of searching means for searching for delimiter information.

### Processes of Obtaining and Providing Content Data and Delimiter Information

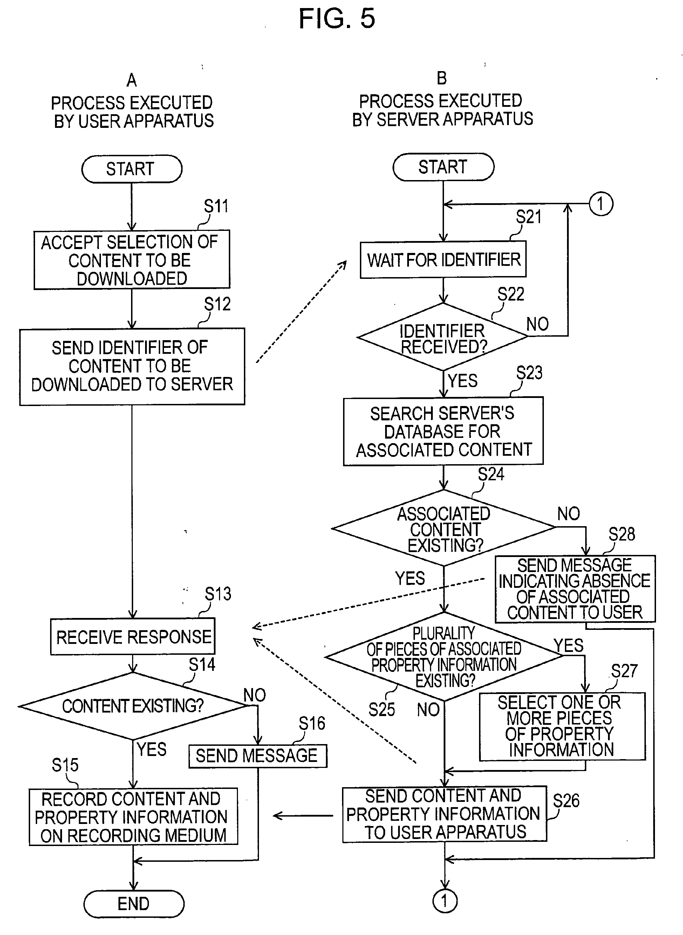

Next, a process in which a recording and playback apparatus of a user (simply referred to as a user apparatus herein) D1, D2, D3, or DX4 obtains content data and accompanying delimiter information from the content server SV (simply referred to as a server apparatus herein), and a process in which the server apparatus SV provides content data and accompanying delimiter information in response to a request from the user apparatus D1, D2, D3, or D4 will be described with reference to a flowchart shown in Fig. 5.

The description will be given in the context of an example where a user apparatus receives content data and accompanying delimiter information from a server apparatus. However, the processes are substantially the same in cases where delimiter information is exchanged between user apparatuses of different users or delimiter information is exchanged between user apparatuses of the same user. That is, a user apparatus that requests delimiter information be provided executes substantially the same process as the user apparatus, and an apparatus that provides delimiter information executes substantially the same process as the content server SV.

In Fig. 5, part A shows a process executed by a user apparatus that requests that content data and accompanying delimiter information be provided, and part B shows a process executed by a server apparatus that provides content data and accompanying delimiter information. In step S11, when a predetermined operation is performed at the user apparatus for activating a program to request that content data and accompanying delimiter information be provided, the controller 10 of the user apparatus accepts input of selection of content data that is to be downloaded.

Then, in step S12, on the basis of selection input accepted, the controller 10 of the user apparatus generates a content providing request including an identifier of the content data to be downloaded, and sends the request to the server apparatus SV via the external I/F 41 and the Internet 100.

The controller 110 of the server apparatus is constantly executing the process shown in part B of Fig. 5. In step S21, the controller 110 monitors whether a content-data providing request arrives from the user apparatus via the Internet 100 and the external I/F 132 thereof. In step S22, the controller 110 checks whether a providing request has been received. When it is determined in step S22 that no content-data providing request has been received, the process returns to step S21 to wait for arrival of a content-data providing request.

When it is determined in step S22 that a content-data providing request has been received by the controller 110 of the server apparatus from the user apparatus, the process proceeds to step S23, in which the controller 110 of the server apparatus searches for target content data and accompanying delimiter information from the content data stored on the recording medium 121 thereof, on the basis of the content data identifier included in the request received.

Then, in step S24, the controller 110 of the server apparatus checks whether the target content data exists. When it is determined that the target content data exists, the process proceeds to step S25, in which the controller 110 checks whether a plurality of pieces of delimiter information for the target content exists. When it is determined in step S25 that only a single piece of delimiter information exists for the target content data, the process proceeds to step S26, in which the controller 110 returns the content data and the single piece of accompanying delimiter information to the user apparatus at the source of the request via the external I/F 132 and the Internet 100. The process then returns to step S21, and subsequent steps are repeated.

When it is determined in step S25 that a plurality of delimiter information exists for the target content data, the process proceeds to step S27, in which the controller 110 of the server apparatus selects one or more pieces of delimiter information. Then, in step S26, the controller 110 sends the target content data and the one or more pieces of accompanying delimiter information selected to the user apparatus at the source of the request via the external I/F 132 and the Internet 100. The process then returns to step S21, and subsequent steps are repeated.

Regarding selection of delimiter information in step S27, various methods can be used. For example, the user of the user apparatus and an administrator of the server apparatus may make an advance agreement on the number of pieces of delimiter information to be provided. Alternatively, the number of pieces of delimiter information requested may be specified by the user apparatus so that the specified number of delimiter information will be selected. Furthermore, a type of delimiter information requested may be specified by the user apparatus so that the specified type of delimiter information will be selected. When the number of pieces of the type of delimiter information is specified by the user apparatus, a step of accepting such information at the user apparatus is provided, and the information accepted is sent to the server apparatus as included in a providing request.

When it is determined in step S24 that the target content data does not exist, the process proceeds to step S28, in which the controller 110 of the server apparatus generates a message indicating the absence of the target content data and returns the message to the user apparatus at the source of the request via the external I/F 132 and the Internet 100. The process then returns to step S21, and subsequent steps are repeated.

In step S13, the user apparatus at the source of the request receives the response from the server apparatus via the external I/F 41. Then, in step S14, the user apparatus checks whether the requested content data has been transmitted on the basis of the response received. When it is determined that the requested content data has been received, the process proceeds to step S15, in which the content data and the accompanying delimiter information received are recorded on the recording medium 32 of the recording and playback apparatus. The process shown in part A of Fig. 5 is then exited.

When it is determined in step S14 that the requested content data has not been received (i.e., a message indicating the absence of the content data has been received), the process proceeds to step S16, in which the controller 10 of the user apparatus notifies the user that the target content data does not exist, using a display element thereof such as an LCD (liquid crystal display), a light emitting element thereof such as an LED (light emitting diode) (not shown in Fig. 1), a buzzer, or an alarm. The process shown in part A of Fig. 5 is then exited.

As described above, when receiving target content data, the user apparatus can also receive accompanying delimiter information. Furthermore, the user apparatus can record the content data and the accompanying delimiter information on the recording medium for use.

That is, since content data is provided together with accompanying delimiter information for the content data, when the content data is played back, it is possible to reconstruct, reedit, or otherwise process the content data using the delimiter information for the content data.

### Another Example of Distribution of Content Data and Delimiter Information

In the example shown in Fig. 3, the content server SV distributes content data and accompanying delimiter information via the Internet 100 in response to a content-data providing request from the user apparatus. However, other embodiments are possible. For example, it is possible to record content data and accompanying delimiter information on a recording medium and to provide the user apparatus with the content data and the delimiter information via the recording medium.

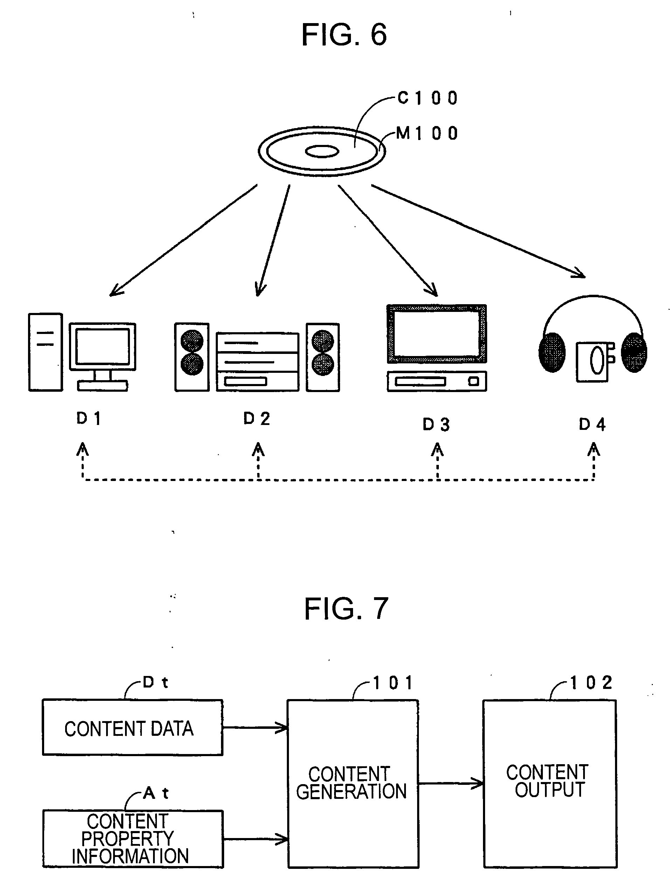

Fig. 6 is a diagram for explaining an example where content data and delimiter information for the content data are provided to various user apparatuses using recording media. Referring to Fig. 6, for example, a recording medium such as a CD, having recorded thereon content data C100 and delimiter information M100 for the content data C100, is distributed. In this case, content data and delimiter information for the content data can be provided to user apparatuses that are capable of reading information recorded on CDs.

In the example shown in Fig. 6, each of the personal computer D1, the audio apparatus D2, the video apparatus D3, and the portable AV apparatus D4 receives target content data and accompanying delimiter information for the content data from a CD having recorded content data and associated delimiter information thereof, and can use the content data and the delimiter information.

For example, the personal computer D1 can obtain information via a recording medium such as a CD having recorded content data and associated delimiter information thereon, and provide the set of content data and accompanying delimiter information via a digital I/F or the like connected with a LAN or another apparatus as indicated by dotted lines in Fig. 6.

The recording medium used for distribution of content data and associated delimiter information is not limited to optical disks, and other types of disks, including magneto-optical disks such as MDs, semiconductor memories, and magnetic recording media such as flexible disks, can be used. Reconstruction and Playback of Content Data

As described earlier, in the recording and playback apparatus according to this embodiment, when content data recorded on the recording medium 32 thereof is to be played back, it is possible, if so instructed by the user, to reconstruct the content data to be played back on the basis of delimiter information accompanying the content data and an instruction input via the input I/F 42, and to thereby output new content data for playback.

Fig. 7 is a diagram for explaining a function for reconstructing content by the recording and playback apparatus according to this embodiment. Referring to Fig. 7, in the recording and playback apparatus according to this embodiment, content data Dt and delimiter information that is content property information associated with the content data Dt are stored in association with each other on the recording medium 32.

When playback of an intended piece of content data stored on the recording medium 32 is instructed with a user's instruction to reconstruct the content data using delimiter information, the controller 10 reads the content data Dt to be played back from the recording medium 32 via the I/F 31, and reads delimiter information that is content property information At for the content data Dt from the recording medium 32.

Then, the controller 10 reorders segments of the content data, removes certain segments, adds information to certain segments, or otherwise processes the content data on the basis of the content property information At serving as delimiter information and the instruction input by the user, thereby generating new content data. The function of generating new content is implemented as a content generating function 101 by the controller 10.

The newly generated content data is separated into audio data and video data. The audio data is supplied to the decoder 21 of the output unit 20, and the video data is supplied to the decoder 23 of the output unit 20. The decoder 21 performs expansion and D/A (digital-to-analog) conversion on the audio data to generate audio signals for output, and supplies the audio signals to the audio output device 22. Similarly, the decoder 23 performs expansion and D/A (digital-to-analog) conversion on the video data to generate video signals for output, and supplies the video signals to the video display device 24.

Thus, the audio output device 22 produces sound corresponding to the reconstructed content data, and the video display device displays images corresponding to the reconstructed content data. In this manner, a content outputting function 102 is implemented by cooperation of the controller 10 and the output unit 20.

### Specific Example of Delimiter Information and Example of Use Thereof

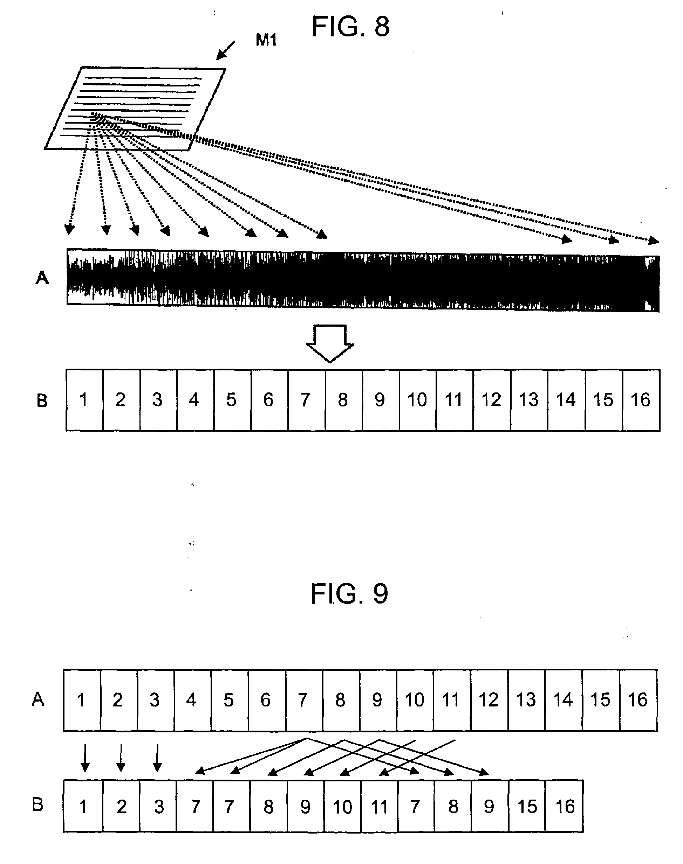

Fig. 8 is a diagram for explaining a case where the content data is music content data and delimiter information thereof represents bars. When bar-delimiter information representing bar-delimiter positions is delimiter information M1, as described earlier, in the case of music content data recorded on an optical disk, the delimiter information is represented, for example, by time information of subcodes, sector addresses or cluster addresses of the optical disk, the number of bytes or bits from the beginning, the number of samples, or the number of compressed blocks from the beginning when the music content data is compressed.

When the number of bytes, the number of bits, the number of samples, or the number of compressed blocks is used, without limitation to the number as counted from the beginning, the delimiter information may be represented by a difference relative to immediately previous delimiter information, or with reference to a predetermined position, for example, the end position. Also, as described earlier, the delimiter information can be represented using a predetermined mathematical expression.

When the music content data shown in part A of Fig. 8 is segmented using the delimiter information, the music content data is divided on a bar-by-bar basis as shown in part B of Fig. 8. Thus, it is possible to specify each individual bar and to handle the bar as independent data.

Fig. 9 is a diagram for explaining an example where music content data is reconstructed using the bar-delimiter information shown in Fig. 8. Since the music content data of each bar can be used independently on the basis of the bar-delimiter information, it is possible to divide the original content data shown in part A of Fig. 9 on a bar-by-bar basis on the basis of the delimiter information M1, and to reorder the bars for playback as shown in part B of Fig. 9, thereby reconstructing the music content data.

For example, as shown in part B of Fig. 9, when the user likes the bar 7 (the seventh bar of the original content data), it is readily possible to repeatedly listen to the bar 7. In this case, the user of the user apparatus can reconstruct audio content data so that the order of bars is rearranged and playback the reconstructed audio content data simply by specifying a new order of bars.

Information for the reordering of bars, i.e., information for reconstruction, can be input by the user to the recording and playback apparatus of the user and recorded on the recording medium 32. Alternatively, the information may be input in advance and recorded on the recording medium 32. In the case of the example shown in Fig. 9, the information for reconstruction, i.e., the information for reordering bars, is information specifying a new order of bars 1, 2, 3, 7, 7, 8, ... using the bar numbers representing the order of bars in the original content. In this case, for example, the bar 3 and the bar 7 are not continuous in the original content data, so a small noise can occur. In such as case, a very short period at the end of the bar 3 and a very short period of the bar 7 are muted so that these bars are heard as naturally continuous content.

Although the description has been given in the context of an example where the delimiter information is bar-delimiter information, as described earlier, delimiter information on the basis of a plurality of bars, or delimiter information on the basis of component parts of music content data, such as an introduction, the first chorus, a highlight portion, an interlude, the second chorus, and a highlight portion, may be used, so that it is readily possible, for example, to repeat a highlight portion or to repeat the introduction.

Furthermore, it is possible to join only highlight portions of a plurality of pieces of content data to form a single piece of music content data and to playback the piece of music content data. In this case, music content data and delimiter information of highlight portions are used as information for reconstruction. More specifically, the identifier of the first piece and delimiter information for a highlight portion of the first piece, the identifier of the second piece and delimiter information for a highlight portion of the second piece, and the identifier of the third piece and delimiter information for a highlight portion of the third piece, and so forth, are used for joining highlight portions for reconstruction.

Also in the case of video content or AV content, by using delimiter information, it is readily possible to repeatedly play back a desired portion of video data or to reorder the content for playback. Furthermore, it is readily possible to create content in which only specific portions of a plurality of pieces of video content or AV content are joined, such as digests.

### Other Examples of Use of Delimiter Information First Other Example of Use

When the mode of playback of content data is changed in synchronization with user's actions, the user feels a stronger sense of synchronization with the content played back. With the improved sense of synchronization, the sense of comfort, excitement, and entertainment of the content played back is improved. Particularly, when the user moves his/her body in synchronization with the rhythm, the user feels a good sense of synchronization when the delimiters of the music are synchronized with the rhythm.

Thus, in a recording and playback apparatus proposed below, the movement of the user is detected using a sensor, and the output of the sensor is used as information for reconstructing content data together with delimiter information, so that the sense of synchronization given by the music content is increased.

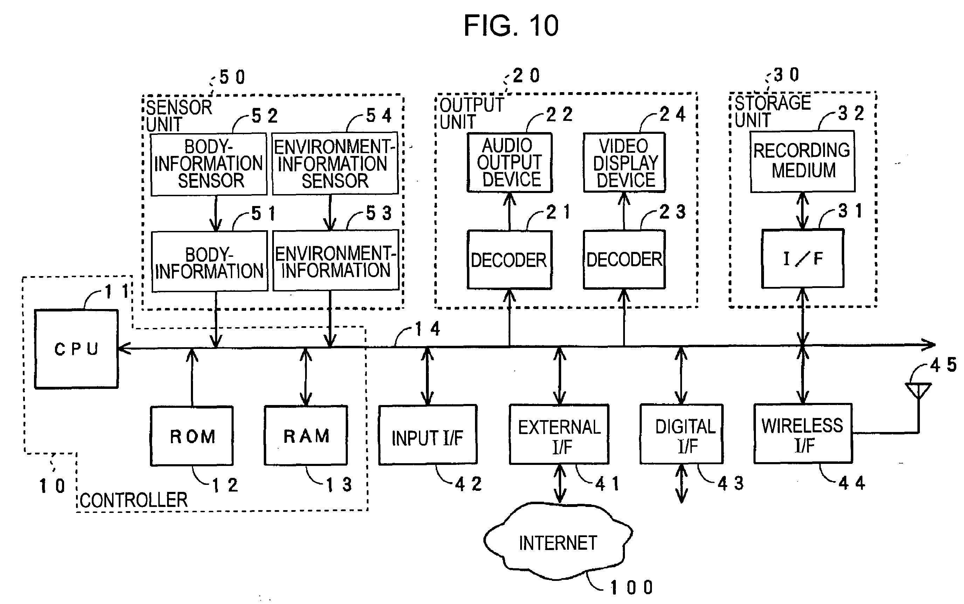

Fig. 10 is a block diagram of a recording and playback apparatus according to an embodiment of the present invention, including a sensor for detecting movement of a user. The recording and playback apparatus according to this embodiment is constructed the same as the recording and playback apparatus shown in Fig. 1, except in that it includes a sensor unit 50. Thus, parts of the recording and playback apparatus shown in Fig. 10 that are constructed the same as corresponding parts of the recording and playback apparatus shown in Fig. 1 are designated by the same numerals, and descriptions thereof will be omitted.

Referring to Fig. 10, the sensor unit 50 includes a body-information decoder 51, a body-information sensor 52, an environment-information decoder 53, and an environment-information sensor 54. The body-information sensor 52 is, for example, an acceleration sensor, a step sensor (vibration sensor), or a direction sensor, which is attached to the body of the user so that movement of the user can be detected and captured in the form of electric signals. Alternatively, the body-information sensor 52 may be, for example, a video camera that captures images of the user. This allows detecting movement of the user by analyzing the video data captured by the video camera.

The movement of the user refers to movement of a user of the recording and playback apparatus according to this embodiment, such as lateral movement of the head, movement of hands, vertical, lateral, or forward-backward movement of the trunk, movement of the legs, hand clapping, or steps of walking. Furthermore, instructions input by the user using buttons or a keyboard, a special interface of a percussion instrument, or the like, can be used as information representing movement of the user.

The body-information encoder 51 converts detection data fed from the body-information sensor 52 into data in a format for providing the data to the controller 10. That is, the body-information encoder 51 acts as an interface between the body-information sensor 52 and the controller 10 of the recording and playback apparatus.

The environment-information sensor 54 is, for example, a temperature sensor, a humidity sensor, a wind-force sensor, or a brightness sensor, which detects information regarding an environment of the user and provides the information in the form of electric signals. The environment-information decoder 53 converts detection data fed from the environment-information sensor 54 into data in a format for providing the data to the controller 10. The environment-information decoder 53 acts as an interface between the environment-information sensor 54 and the controller 10 of the recording and playback apparatus.

Then, sensor signals obtained by the body-information sensor 52 and the environment-information sensor 54 are input to the controller 10 of the recording and playback apparatus via the body-information encoder 51 and the body-information sensor 52. The controller 10 reconstructs content data that is to be playback, using the sensor signals fed from the sensor unit 50 and in consideration of delimiter information for the content data, and plays back the content data reconstructed.

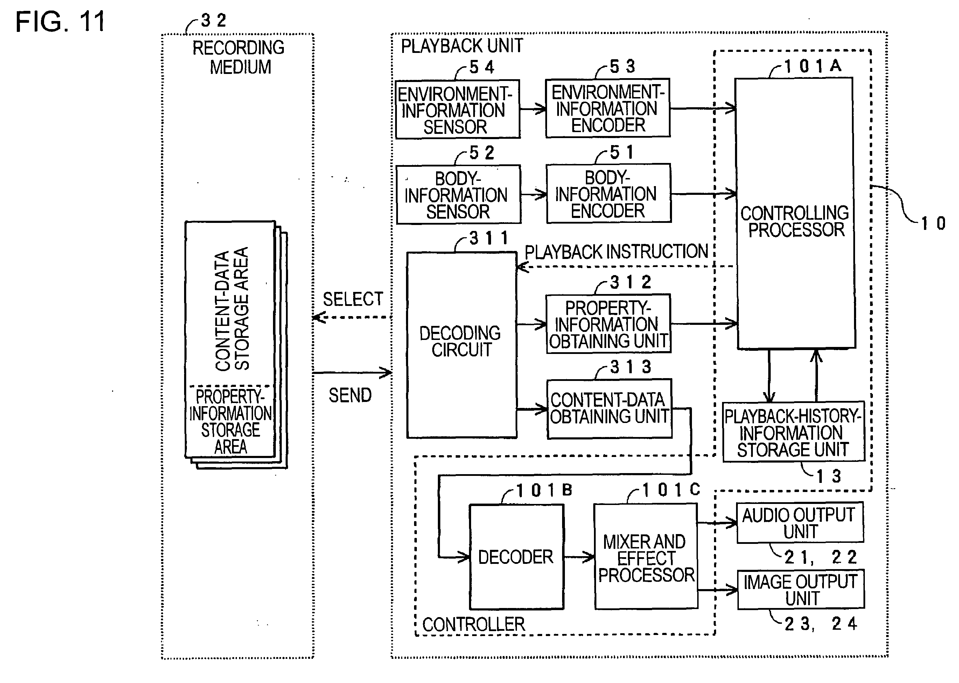

Fig. 11 is a block diagram for describing in detail the recording and playback apparatus according to this embodiment. In the recording and playback apparatus according to this embodiment, parts other than the recording medium 32 and the external I/F 41, the input I/F 42, the digital I/F 43, and the wireless I/F 44 function as a playback unit.

The recording medium 32 includes a content-data storage area and a property-information storage area. As described earlier, on the recording medium 32, content data and property information thereof are stored in association with each other. The controller 10 functions as a controlling processor 101A, a decoder 101B for decoding content data, and a mixer and effect processor 101C. Furthermore, in this embodiment, the RAM 13 functions as a playback-history-information storage unit.

The sensor signal obtained by the body-information sensor 52 is fed to the controlling processor 101A of the controller 10 via the body-information encoder 51 as a body-information obtaining unit. The sensor signal obtained by the environment-information sensor 54 is fed to the controlling processor 101A of the controller 10 via the environment-information encoder 53 as an environment-information obtaining unit.

Content data according to the playback instruction accepted via the input I/F 42 is read according to the playback instruction from the controlling processor 101A of the controller 10 via the I/F 31 that functions as a decoding circuit 311, a property-information obtaining unit 312, and a content-data obtaining unit 313. Delimiter information, which is content-property information, is fed to the controlling processor 101A of the controller 10. The content data is fed to the decoder 101B of the controller 10.

Then, the controlling processor 101A of the controller 10 generates a control signal for reconstructing content data that is to be played back, using the sensor signal fed from the body-information sensor 52, the sensor signal fed from the environment-information sensor 54, and the delimiter information for the content data, read from the recording medium 32, and supplies the control signal to the mixer and effect processor 101C.

The content data to be played back is expanded or otherwise processed in the decoder 101B, and the resulting data is fed to the mixer and effect processor 101C. The decoded data is processed on the basis of the control signal fed from the controlling processor 101A. For example, segments such as bars are reordered in accordance with delimiters according to the delimiter information, or the tempo of playback is adjusted in accordance with the sensor signals in synchronization with delimiters according to the delimiter information. That is, the mixer and effect processor 101C functions as a unit for executing reconstruction of content data.

Audio signals fed from the mixer and effect processor 101C are fed to the audio output unit 21 and 22 to produce playback sound. Video signals fed from the mixer and effect processor 101C are fed to the video output unit 23 and 24 to produce playback image.

With the recording and playback apparatus according to this embodiment, constructed as described with reference to Figs. 10 and 11, it is possible to reconstruct content data in consideration of user's movement and delimiter information and to play back the content data reconstructed.

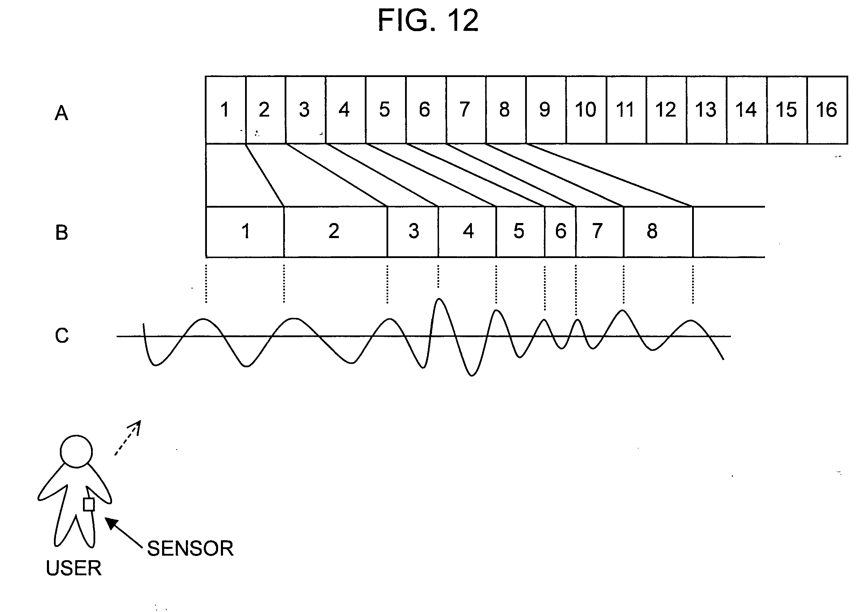

Fig. 12 is a diagram for explaining a specific case where music content having bar-delimiter-position information as delimiter information is reconstructed using the recording and playback apparatus according to this embodiment. Part A of Fig. 12 shows music content having bar-delimiter-position information as delimiter information. Part C of Fig. 12 shows a sensor signal representing the result of real-time detection by the body-information sensor 52, i.e., the waveform of a sensor signal representing movement of the user.

In this case, the user first moves slowly, then gradually faster, and then slowly again. Thus, in synchronization with such movement, the tempo of the bars of the music content data to be played back is varied as shown in part B of Fig. 12.

Thus, for example, when the user moves his/her body in synchronization with the rhythm of the music, the rhythm of the user's movement synchronizes with the delimiters of the music content, so that the user feels a good sense of synchronization. Accordingly, with the increased sense of synchronization for the user, the content played back provides improved comfort, excitement, and entertainment.

As described above, with the recording and playback apparatus according to this embodiment, it is possible to play back content data with timing of user's movement synchronized with delimiter positions on the basis of delimiter information for the content data. For the purpose of synchronization with the user's movement, content is reconstructed in real time in consideration of sensor signals. The bars of the music data are expanded in accordance with the user's movement. By predicting the timing of a next move of the user, smoother playback can be achieved.

The prediction is possible by various methods. For example, sensor signals from the body-information sensor 52 are monitored from before playing back content data so that past information is considered for prediction. As another example, periodicity of the user's movement is detected so that the user's movement can be predicted on the basis of the periodicity.

The order of content may be the original order of content or may be changed on the basis of sensor signals. When the order is changed on the basis of sensor signals, for example, it is possible to select a bar of a large acoustic volume for a large movement and select a part with a high tempo when the movement changes rapidly.

Instead of body information, it is possible to sense environment information so that content delimiters can be synchronized with change in environmental factors, such as brightness of light, wind force, or temperature.

Since content is reconstructed in real time according to sensor signals, basically, content that is generated differs each time. However, by storing playback history in the playback-history storage unit 13 shown in Fig. 11, it is possible to playback content reconstructed in the same way according to a user's request.

### Second Other Example of Use

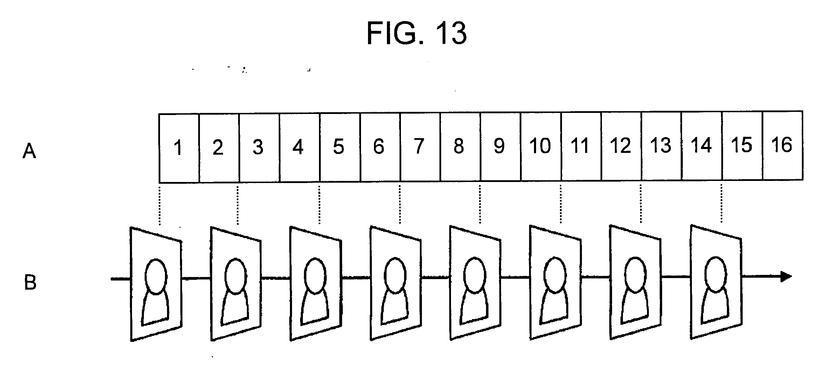

Fig. 13 shows another example of use of delimiter information (another example of reconstruction of content data). When delimiters of music are synchronized with delimiters of images, the user feels a sense of synchronization, and is more strongly impressed by the content.

In this example, in synchronization with delimiter information of music content data C1, another piece of still image content is displayed so that a slide show is automatically created. By displaying the image in synchronization with the delimiters of the music, the slide show exhibits a stronger sense of synchronization.

In the example shown in Fig. 13, a single image is arbitrarily selected from an image set G1 for each set of two bars, and the image selected is displayed. Instead of still images, moving images may be used for a slide show. As well as starting display of a moving image in synchronization with a delimiter, the display of moving image may be stopped in synchronization with a delimiter. By synchronizing the end of sound and the end of image, the impression of the content is improved.

### Process of Reconstructing Content

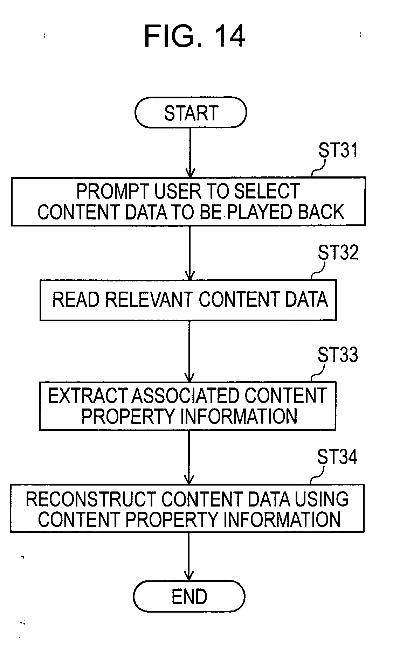

Fig. 14 is a flowchart of a process of reconstructing content data by the recording and playback apparatus shown in Fig. 1 or the recording and playback apparatus shown in Figs. 10 and 11. The process shown in Fig. 14 is executed by the controller 10 when a user's instruction for playing back content data is received via the input I/F 42.

When a playback instruction is received, in step S31, the controller 10 accepts, via the input I/F 42, input of user's selection of content data that is to be played back. Then, in step S32, the controller 10 reads the content data according to the selection input accepted from the recording medium 32 via the I/F 31. Then, in step S33, the controller 10 extracts delimiter information provided together with the content data. Then, in step S34, the controller 10 reconstructs and plays back the content data on the basis of the delimiter information extracted, and reconstruction information instructed by the user, for example, indicating the order of bars, or results of detection by a body-information sensor or an environmental-information sensor.

By distributing delimiter information of content data, which has hitherto not been provided, together with the content data as described above (i.e., by providing a pair of content data and accompanying delimiter information), it is possible to reconstruct the content data using the delimiter information accompanying the content data. That is, it is possible to play back existing content data as if the content data is entirely new content data.

Furthermore, the user can instruct reconstruction for playing back content data without complex operations or the like, just like selecting content data that is to be played back.

### Manner of Storing Content Data and Delimiter Information

As described above, content data is exchanged together with accompanying delimiter information as content property information. It is possible to store delimiter information on a recording medium in a separate file from content data, and to manage the delimiter information in association with the content data.

However, by managing delimiter information in the same file as the content data, it is possible to transfer the delimiter information together with the content data. That is, it is not needed to manage content data and associated delimiter information separately. Thus, methods of allowing content data and delimiter information as content property information to be managed in the same file will be described.

### Use of WAVE File

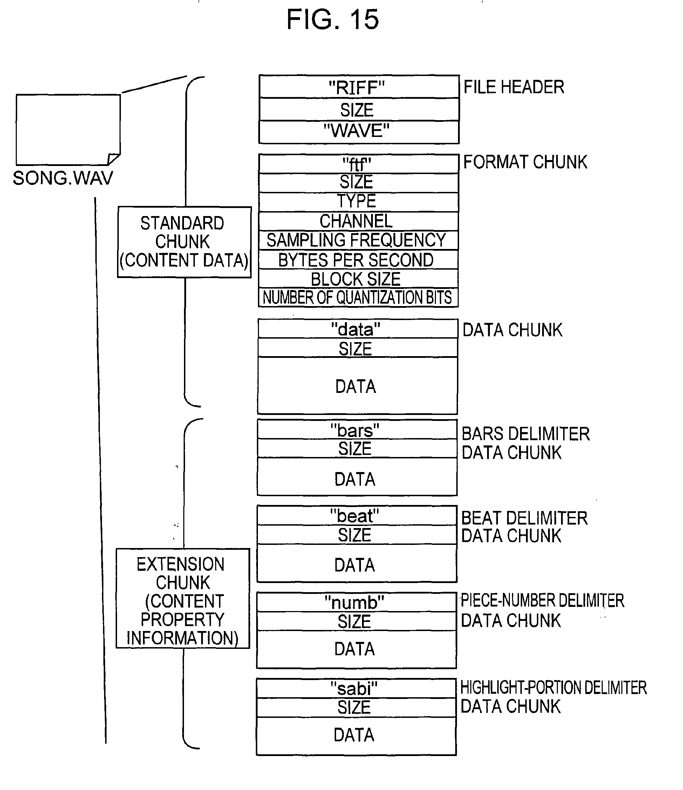

Fig. 15 is a diagram for explaining an example where content data and delimiter information as content property information are managed using a WAVE file. a WAVE file is usually a standard chunk composed of a file header, a format chunk, and a data chunk, but an extension chunk can be defined.

Referring to Fig. 15, in the case of the WAVE file SONG.WAV in this example, the file header includes a file ID composed of four-character text data ("RIFF" in Fig. 15), and a chunk ID composed of four-character text data and indicating the content of data ("WAVE" indicating music data in Fig. 15).

The format chunk includes a chunk ID indicating that the chunk is a format chunk ("fmt" in Fig. 15), a size, a type, a channel, a sampling frequency, the number of bytes per second, a block size, and the number of quantization bits.

The data chunk is a portion where content data is actually stored, and it includes a chunk ID, a size, and content data. The file header, the format chunk, and the data chunk constitute a standard chunk, in which content data is stored and managed. In this example, an extension chunk is provided in the WAVE file (SONG.WAV), in which delimiter information as content property information can be stored and managed.

In the example shown in Fig. 15, four extension chunks, namely, a bars-delimiter data chunk, a beat-delimiter data chunk, a piece-number-delimiter data chunk, and a highlight-portion-delimiter data chunk, are provided, and four types of delimiter information are stored and managed for audio content data stored in the data chunk. Each of the extension chunks includes a delimiter-information ID representing the type of delimiter information, a size, and delimiter information.

As described above, within the same file, it is possible to store and manage content data in the data chunk and a plurality of types of delimiter information for the content data in the extension chunks. By specifying a file, it is possible to reliably and quickly grasp delimiter information for content data as well as the content data itself.

### Use of File of New Format

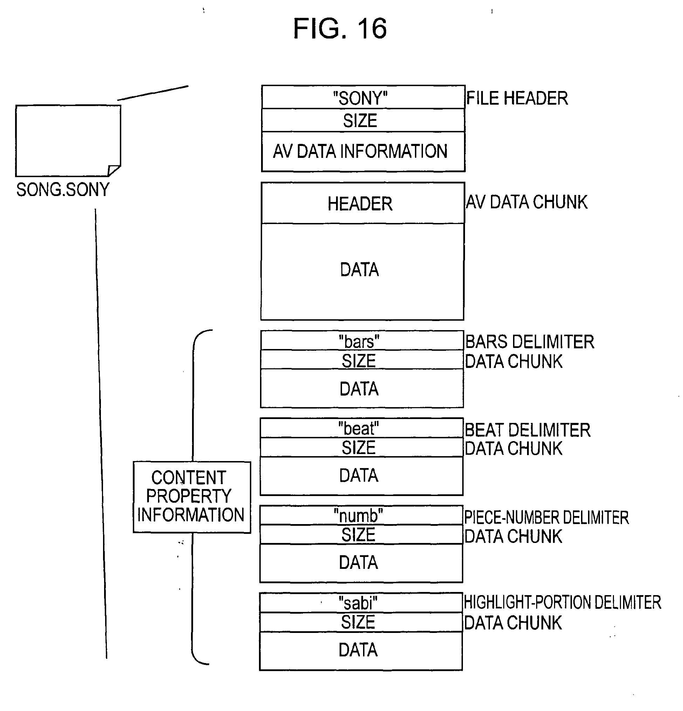

Even when various types of files other than a WAVE file are used, it is possible to manage content data and associated delimiter information in a single file. Fig. 16 is a diagram for explaining a new file format for allowing management of content data and associated delimiter information.

For example, in order to allow management of the entire file SONG.SONY, similarly to the example shown in Fig. 15, a file header is used. In this example, content data is stored and managed in an AV chunk including a header part and a data part. A plurality of data chunks for managing a plurality of types of delimiter information is provided in the same file, so that the plurality of types of delimiter information for the content data stored in the AV data chunk can be stored and managed therein.

As shown in Fig. 16, also in this example, four extension chunks, namely, a bars-delimiter data chunk, a beat-delimiter data chunk, a piece-number-delimiter data chunk, and a highlight-portion-delimiter data chunk, are provided, and four types of delimiter information are stored and managed for content data stored in the AV data chunk. Each of the extension chunks includes a delimiter-information ID representing the type of delimiter information, a size, and delimiter information. Use of SMF (Standard Midi File)

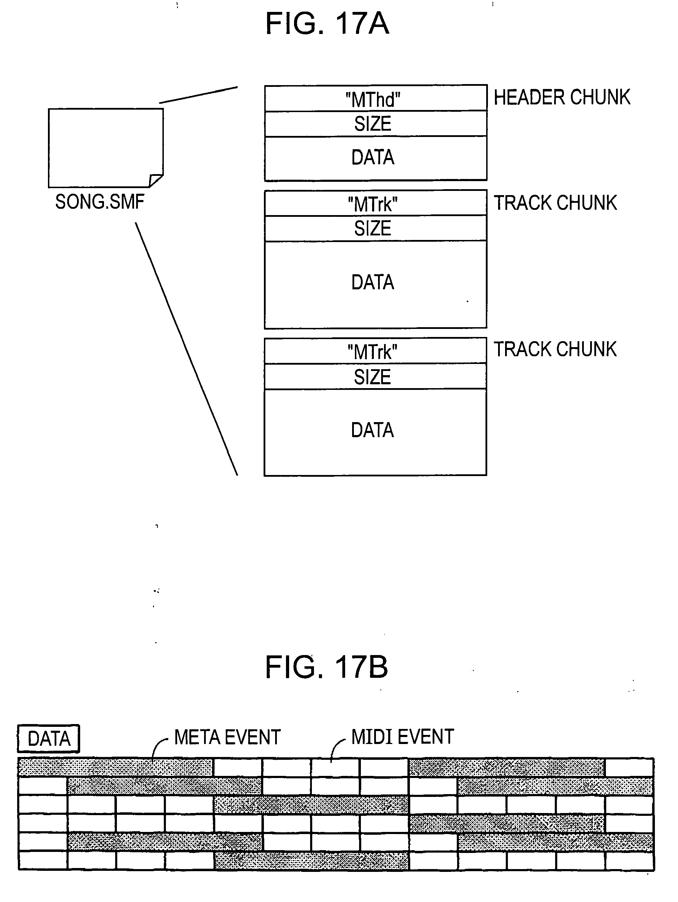

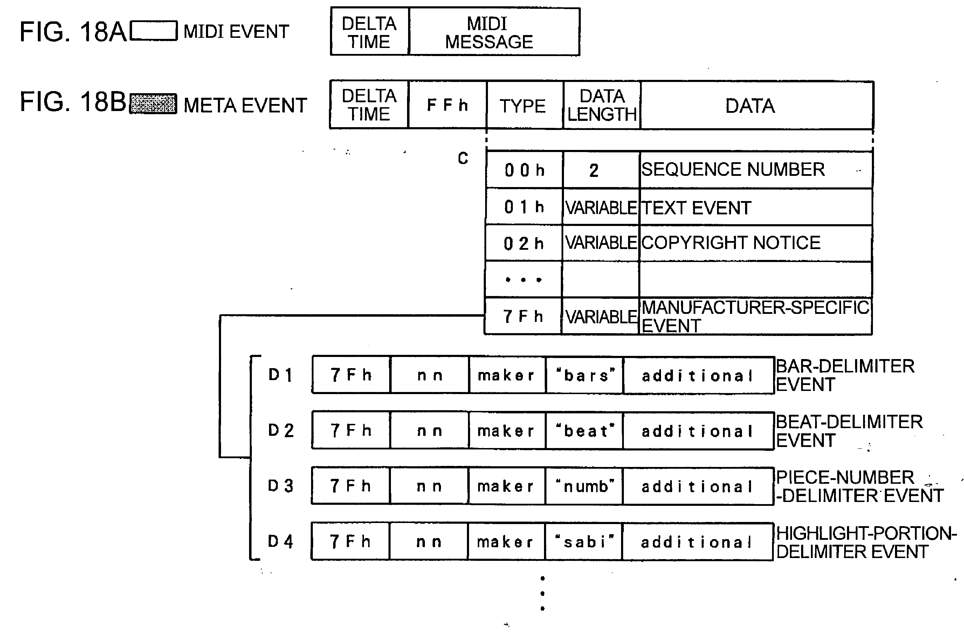

It is also possible to manage content data and delimiter information in a single file using an SMF. Figs. 17A and 17B and Figs. 18A and 18B are diagrams for explaining examples where both content data and delimiter information can be managed using an SMF.

As shown in Fig. 17A, a single SMF file SONG.SMF is generally composed of a header chunk that serves as a file header and a track chunk where content data is stored. The header chunk includes a file ID ("MThd" in Fig. 17A), a size, and data. The track chunk includes a track chunk ID ("TRrk" in Fig. 17A), a size, and data. The data part of the track chunk includes two types of areas, meta-event areas indicated by hatching and MIDI-event areas indicated as empty, temporally arranged from top left to bottom right, as shown in Fig. 17B.

As shown in Fig. 18, the MIDI event of the data part of each track chunk includes a delta time representing a difference in time from the previous event, channel information, a note number (a MIDI message indicating a tone), a velocity (a MIDI message indicating the intensity of sound), and other MID messages.

The meta event of the data part of each track chunk includes a delta time representing a difference in time from the previous event, a data type, a data length, and data. The data type allows distinction as to, for example, whether the meta event indicates a sequence number, a text event, or a copyright notice.

The data type "7Fh" indicates a portion that can be used arbitrarily by a manufacturer. By using a meta event that can be used arbitrarily by a manufacturer, it is possible to store and manage delimiter information for content data. The letter "h" in notations such as "7Fh" indicates that numerals and alphabets from "A" to "F" preceding it are in hexadecimal notation.

As shown in Fig. 18, when the code type is "7Fh" in the meta event of the data part of the track chunk, by forming a meta event including information representing a data length, information representing that the field is used by a manufacturer, information representing the content of the data, and actual delimiter information, it is possible to store and manage MIDI content data and delimiter information together in a single file in the SMF format.

Also in the example shown in Fig. 18, it is possible to represent and store a plurality of types of delimiter information, such as "bars" (bar delimiters), "beat" (beat delimiters), "numb" (piece-number delimiters), and "sabi" (highlight-portion delimiters).

As described above, even with an existing file format such as WAVE or SMF, it is possible to store content data and delimiter information in a single file, and to manage the delimiter information in association with the content data. By using a new file format without unneeded information, suitable for managing content data and delimiter information, for example, the format shown in Fig. 16, it is possible to simplify management or to optimize the amount of data.

As described earlier, delimiter information for content data may be represented in various forms, such as an hour-minute-second timestamp, the number of bytes from the beginning of content, the number of samples, cluster addresses or sector addresses on a disk, or a difference relative to a previous delimiter. Thus, delimiter information can be represented in suitable forms depending on, for example, the providing route, such as a recording medium having recorded content data thereon.

Furthermore, although content data and delimiter information as content property information are transmitted or distributed via the Internet, an input/output interface of a recording and playback apparatus, or distribution of a recording medium, other embodiments are possible. For example, content data may be analyzed in a user apparatus to automatically generate delimiter information, or delimiter information may be input by the user.

For example, when the content data is music content data, delimiter information may be generated by automatically analyzing the music content data to detect beat or tempo and accordingly extracting points of change in beat or tempo. Furthermore, the user may input the start and end points of an introduction, the start and end points of the first chorus, the start and end point of an interlude, and so forth, so that delimiter information is generated using these pieces of information.

The delimiter information created or input by the user can be uploaded on a server apparatus for public access, exchanged between recording and playback apparatuses by peer to peer, or recorded on a recording medium for distribution. Also, content data with accompanying delimiter information created or input by the user can be uploaded on a server apparatus for public access, exchanged between recording and playback apparatuses by peer to peer, or recorded on a recording medium for distribution.

When the content data is music content data, the music content data may be either compressed or uncompressed.

As for recording media for recording content data and delimiter information thereon, various types of recording media can be used, such as optical disks, magneto-optical disks, magnetic tapes, hard disks, semiconductor flash memories, or servers on networks.

As for optical disks and magnetic disks as recording media, various types can be used, such as CDs (Compact Disks) MDs (Mini Discs), Hi-MDs, SACDs (Super Audio Compact Discs), DVDs (Digital Versatile Discs), or Blu-ray Discs.

Furthermore, various formats of music content data can be used, such as PCM (Pulse Code Modulation), WAVE, AU, AIFF, MIDI (Musical Instrument Digital Interface), ATRAC (Adaptive Transform Acoustic Coding), ATRAC3 (Adaptive Transform Acoustic Coding 3), ATRAC3plus (Adaptive Transform Acoustic Coding 3 plus), MPEG-2 (Moving Picture Experts Group 2), AAC (Advanced Audio Coding), MP3 (Moving Picture Experts Group 1 Audio Layer 3), TwinVQ (Transform-domain Weighted Interleave Vector Quantization), MS Audio, or OggVorb.

Furthermore, various formats of video data can be used, such as JPEG (Joint Photographic Experts Group), GIF (Graphics Interchange Format), PNG (Portable Network Graphics), DV (Digital Video), MPEG1 (Moving Picture Experts Group 1), MPEG2 (Moving Picture Experts Group 2), MPEG4 Visual (Moving Picture Experts Group 4 Visual), MPEG4 AVC (Moving Picture Experts Group 4 Advanced Video Coding), MPEG7 (Moving Picture Experts Group 7), AVI (Audio Video Interleaving), Real Video, Quick Time Macromedia Flash, nancy, or Windows® Video.

The content identifier can be uniquely generated from the total number of tracks of a disk or playback time of tracks. Alternatively, the content identifier can be uniquely generated from the entirety or a part of music data or video data. The method can be selected depending on the manner of use or the capability of the apparatus used. Obviously, the content identifier may be recorded in advance in association with content.

The content using apparatus and content using method according to the embodiment can be applied to various recording and playback apparatuses as described earlier, such as personal computers, audio apparatuses, video apparatuses, and portable AV apparatuses.

Although the embodiment has been described above in the context of an example where the content data is audio content data, video content data, or AV content data, the content data is not limited to these types, and the content data may be, for example, text data. When the content data is text data, delimiter information may be, for example, delimiters of sentences, delimiters of paragraphs, delimiters of pages, delimiters of chapters, or delimiters of volumes.

In this case, the delimiter information may be represented, for example, by the positions of bytes or the number of characters, or a difference thereof. As an example of use, when distributing text data to a portable communication terminal such as an electronic book or a cellular phone, the delimiter information is later stored in association with content data, and parts of text or paragraphs including phrases of interest are extracted and joined for use.

The video content data may be a plurality of still pictures, such as a picture book, instead of moving images. In this case, the delimiter information represents each of the still images.

It should be understood by those skilled in the art that various modifications, combinations, sub-combinations and alterations may occur depending on design requirements and other factors insofar as they are within the scope of the appended claims or the equivalents thereof.

## Claims

1. A content using apparatus comprising:
obtaining means for obtaining content data and delimiter information for the content data;
accepting means for accepting input of an instruction by a user; and
generating means for generating content data of a new composition or arrangement from content data subject to processing, on the basis of the delimiter information obtained by the obtaining means and the instruction accepted by the accepting means.

2. The content using apparatus according to Claim 1, further comprising recording means for recording on the same recording medium the content data and the delimiter information obtained by the obtaining means.

3. The content using apparatus according to Claim 1, further comprising:
first recording means for recording the content data obtained by the obtaining means on a first recording medium; and
second recording means for recording the delimiter information obtained by the obtaining means on a second recording medium.

4. The content using apparatus according to Claim 3,
wherein the content data recorded on the first recording medium is associated with the delimiter information recorded on the second recording medium by an identifier for identifying the content data.

5. The content using apparatus according to Claim 4,
wherein the identifier is assigned in advance to the content data.

6. The content using apparatus according to any one of Claims 2 to 5, further comprising at least one of:
delimiter-information generating means for automatically generating delimiter information recorded on the recording medium; and
delimiter-information input means for accepting input of at least one of an addition instruction, a modification instruction, a deletion instruction, and a replacement instruction relating to the delimiter information recorded on the recording medium.

7. The content using apparatus according to Claim 6, further comprising providing means for providing an external apparatus with the delimiter information generated by the delimiter-information generating means or the delimiter information added, modified, or replaced by the delimiter-information input means.

8. The content using apparatus according to any one of Claims 1 to 7,
wherein the content data is music data, and
wherein the delimiter information for the content data represents a point of change that is characteristic in terms of music or a meaningful music segment.

9. The content using apparatus according to any one of Claims 1 to 8,
wherein the content data is video data, and
wherein the delimiter information for the content data represents a point of change that is characteristic in terms of video or a meaningful video segment.

10. The content using apparatus according to any one of Claims 1 to 9,
wherein the delimiter information is represented using at least one of subcode time information, a sector address, a cluster address, a time code attached to content data, the number of bytes as counted from the beginning of content data, the number of samples, a group of pictures, a video frame, a sound frame, and a unit of compressed block of compressed audio data, these pieces of information being used in the recording medium having recorded the content data thereon, and
wherein the delimiter information is represented using an amount relative to a predetermined reference position, a difference relative to immediately previous delimiter information, or a mathematical expression using the information.

11. The content using apparatus according to any one of Claims 1 to 10,
wherein one or more types of delimiter information are associated with content data, and
wherein the content using apparatus further includes selection-input accepting means for accepting input of selection of target delimiter information from a plurality of pieces of delimiter information associated with a single piece of content data.

12. A content using method comprising the steps of:
obtaining content data and delimiter information for the content data;
accepting input of an instruction by a user; and
generating content data of a new composition or arrangement from content data subject to processing, on the basis of the delimiter information obtained and the instruction accepted.

13. A distribution server apparatus comprising:
storage means for storing content data and delimiter information for the content data in association with each other;
receiving means for receiving a content-data providing request transmitted via a network;
searching means for searching for target content data from the storage means on the basis of the providing request received by the receiving means; and
sending means for sending the content data retrieved by the searching means and delimiter information for the content data to a source of the providing request.

14. The distribution server apparatus according to Claim 13,
wherein the receiving means receives delimiter information for content data, and
wherein the storage means records the delimiter information received by the receiving means in association with associated content data.

15. The distribution server apparatus according to either Claim 13 or Claim 14,
wherein the content data is music data, and
wherein the delimiter information for the content data represents a point of change that is characteristic in terms of music or a meaningful music segment.

16. The distribution server apparatus according to any one of Claims 13 to 15,
wherein the content data is video data, and
wherein the delimiter information for the content data represents a point of change that is characteristic in terms of video or a meaningful video segment.

17. The distribution server apparatus according to any one of Claims 13 to 16,
wherein the delimiter information is represented using at least one of subcode time information, a sector address, a cluster address, a time code attached to content data, the number of bytes as counted from the beginning of content data, the number of samples, a group of pictures, a video frame, a sound frame, and a unit of compressed block of compressed audio data, these pieces of information being used in the recording medium having recorded the content data thereon, and
wherein the delimiter information is represented using an amount relative to a predetermined reference position, a difference relative to immediately previous delimiter information, or a mathematical expression using the information.

18. The distribution server apparatus according to any one of Claims 13 to 17,
wherein one or more types of delimiter information are associated with content data.

19. An information distribution method comprising the steps of:
receiving a content-data providing request transmitted via a network;
searching a'recording medium for target content data and delimiter information for the target content data on the basis of the providing request received, the recording medium storing one or more pieces of content data having associated delimiter information; and
sending the content data retrieved and delimiter information for the content data to a source of the providing request.

20. A recording medium having recorded thereon content data accompanied with delimiter information,
wherein the content data accompanied with the delimiter information is recorded so that the delimiter information for the content data is read in an accompanying manner when the content data is read.

21. The recording medium according to Claim 20,
wherein the content data accompanied with the delimiter information is recorded so that the content data and the delimiter information accompanying the content data are stored in the same file.

22. The recording medium according to Claim 20,
wherein the content data accompanied with the delimiter information is recorded so that the content data and the delimiter information accompanying the content data are stored in different files.

23. The recording medium according to any one of Claims 20 to 22,
wherein the content data is music data, and
wherein the delimiter information for the content data represents a point of change that is characteristic in terms of music or a meaningful music segment.

24. The recording medium according to any one of Claims 20 to 23,
wherein the content data is video data, and
wherein the delimiter information for the content data represents a point of change that is characteristic in terms of video or a meaningful video segment.

25. The recording medium according to Claim 20,
wherein the delimiter information is represented using at least one of subcode time information, a sector address, a cluster address, a time code attached to content data, the number of bytes as counted from the beginning of content data, the number of samples, a group of pictures, a video frame, a sound frame, and a unit of compressed block of compressed audio data, these pieces of information being used in the recording medium having recorded the content data thereon, and
wherein the delimiter information is represented using an amount relative to a predetermined reference position, a difference relative to immediately previous delimiter information, or a mathematical expression using the information.

26. The recording medium according to Claim 20,
wherein one or more types of delimiter information are associated with content data.

27. A computer program comprising program code means that, when executed on a computer system instructs a system to carry out the steps according to either Claim 12 or Claim 19.

28. A computer readable storage medium having recorded thereon program code means that, when executed on a computer system, instructs a system to carry out the steps recording to either Claim 12 or Claim 19.
